# EUROPEAN PATENT SPECIFICATION

(11) **EP 2 309 407 B1**
(45) Date of publication and mention of the grant of the patent: **26.02.2020**
(21) Application number: 09368032.0
(22) Date of filing: 22.09.2009
(51) Int. Cl.: G06F 21/00, G06F 21/10, H04L 29/06, H04L 29/08

(54) **Process for securing the communicatin of a digital file through a communication network**
Verfahren zur Sicherung der Übertragung einer digitalen Datei über ein Kommunikationsnetz
Procédé de sécurisation de la communication d'un fichier numérique via un réseau de communication

(43) Date of publication of application: 13.04.2011
(73) Proprietor: Amadeus S.A.S., 06410 Biot (FR)
(72) Inventor: Mathieu, Eric, 06400 Cannes (FR); Frenkiel, Michel, 64500 Ciboure (FR)
(74) Representative: August Debouzy

(56) References cited:
- EP-A1- 1 669 833
- EP-A2- 1 469 369
- WO-A1-98/42098
- WO-A2-01/79971
- WO-A2-03/036442

## Description

### Technical field of the invention

The invention relates to telecommunications and more particularly to a process for securing the communication of a digital file through a communication network.

### Background art

The internet network has drastically facilitated the communication of files and digital documents, be it video, audio or basic text or word processing files. Such ease in the communication of the digital files has significantly increased the need to provide appropriate protection of the information therein contained, be it commercial copyrighted material or more simply confidential information which should be restricted to authorized users only.

Clearly, the need for securing the communication of digital documents transmitted through a communication network, such as the Internet network, is constantly increasing with the continuous progress of telecommunications equipments.

Some prior art techniques exist for improving the security in the communications of digital files.

A first known technique is based on the use of an encryption mechanism, either based on a symmetric key (ie a same key being used for both the encryption and the decryption) or on a asymmetric key (such as of the RSA - Rivest-Shamir et Adleman) using two distinctive public-private keys for the encryption and decryption mechanism). While such technique shows efficiency, particularly with the constant development of the encryption algorithms, the security clearly relies on the *confidential* status assigned to the decryption key and the protection ceases with the loss of the confidentiality of the latter.

Another known solution which is known in the art is more adapted to the protection of copyrighted materials such as video and audio files, and is based on the known Digital Rights Management (DRM) mechanisms. Protection of copyrighted files is achieved by means of the encryption, prior to its transmission to a user, of a digital document with an information uniquely identifying said user (eg the MAC address of the latter), so as to avoid the use of the document on the system belonging to another user. If such solution shows to be a significant improvement in the protection of one digital information to be forwarded over a network, it only provides limited flexibility for handling a wide number of situations, encompassing different categories of users, different usages rights to be assigned to the digital document to be protected.

Another prior art technique is known under the designation of Adobe LiveCycle which is a software for securing PDF documents. See (www.adobe.com/security/pdfs/acrobat_security_wp.pdf). This known solution integrates encryption of the exchanged files within a company and the management keys. The Usage Rights are also managed using the native security of documents. With Adobe, the document is encrypted once for all using an encryption key. This key is communicated to each users of the document, encrypted with the receiver. This mechanism has two main drawbacks:
- Each stakeholder needs to own a key pair within a PKI accepted by the acceptable within a company but does not fit with the needs of Internet;
- The document encrypted with the same symmetric key is sent to all clients. Anonymity facilitates the unwanted further dissemination of the document, the appropriate control over the information life cycle management.

EP1669833 filed by the Applicant of the present application discloses another prior art solution which significantly increases the security of a transaction based on the generation, during a first qualification procedure, of a System Qualification File (SQF), which is used for generating a Reference Qualification Signature (RQS) which can be used, during a second validation procedure, for the purpose of securing a transaction.

One important aspect of the above mentioned European patent application derives from the fact that the data reported to the Operating System (OS) - be it Windows (from Microsoft Corp.) or Linux or alike, by the different components composing the systems (internal components such as the memory size and physical structure, the processor serial number,... external components such as plug and play devices such as USB keys, monitor, mouse, keyboard... or even passive elements such as a printer or a CDROM... see EP1669833), is systematically used for the purpose of generating a comprehensive System Qualification File which comprises so many parameters and variables that it can be used for uniquely identifying the particular system requesting a transaction. This technique, which has shown to be very effective, is now commercially designated by the Applicant under the name of "The Digital DNA".

The technique which is described in the above mentioned European patent application is however not fully adapted for securing the downloading of a copyrighted or confidential digital file, and particularly for managing the different usage rights or restrictions associated with the digital file to be protected.

In such situation, the very general qualification and verification procedures described by the above mentioned European patent have to be adapted and improved in order to provide a comprehensive and powerful solution for allowing protection of the digital files which are downloaded through a communication network, be it an audio, a video or the basic well-known Portable Document File generated by Adobe Acrobat software marketed by Adobe Inc. International patent application WO01/79971 is further prior art.

More generally, there is a need for an improved solution for generalizing the downloading of commercial or copyrighted materials, while providing easy and fair protection to the copyright owners.

This is the technical problem to be solved by the present invention.

### Summary of the invention

It is an object of the present invention to improve security in the access of an Information Handling System (I.H.S.), and particularly to improve the access to a file to be downloaded from a distant server in a local system.

It is another object of the present invention to provide a process which improves the protection of copyrighted material, such as video or audio files, so as to prevent unauthorized use of the latter in a generic system.

It is a further object of the present invention to provide a process which enhances the protection to be brought to a file containing sensitive and confidential information, by preventing unauthorized access to said information.

It is still another object of the present invention to achieve a process for communicating a digital document wherein the communication of said file is associated with the communication of appropriate properties being properly protected against unauthorized uses.

It is a further object of the present invention to provides a powerful encryption mechanism using the contextual configuration of a IHS machine so as to achieve appropriate protection of the couple information-properties of a downloaded document.

It is still another object to provide a secured mechanism for downloading of a confidential or copyrighted file and for allowing the opening of said file in a secured environment being authenticated by the owner of said document.

It is further object to provide an enhanced mechanism achieving effective document control on copyrighted or confidential files which are downloaded through an intranet or through the Internet network.

These and other objects by the process for communicating a digital file (D1) from a server to an Information Handling System (IHS), the IHS comprising a set of hardware and software components operated by an Operating System (OS) through drivers.

The process involves the steps of:
- initiating of a system detection procedure for the purpose of gathering data from said components through said drivers and reported to said OS;
- generating a system description file from part or whole of the data gathered from said system detection procedure;
- encrypting part or whole of said system description file in order to generate a Authentication Digital Signature (ADS);

Furthermore, the process is characterized in that it further involves the steps of:
- using said Authentication Digital Signature (ADS) for deriving an encryption /decryption key (K1);
- using said key for encrypting a file to be downloaded or for decrypting an encrypted file previously downloaded.

The use of the Authentication Digital Signature (ADS) for generating an encryption/decryption key is particularly advantageous since it allows the possibility to take benefit of the functionalities provided by the encryption/decryption algorithms.

In particular, there is no longer any need to perform any comparison between two signatures, a current signature and a reference signature as in the above mentioned European patent application, thus significantly increasing the level of security of the process.

More particularly, with the invention, it will be even not necessary to communicate the key to the client, once the Authentication Digital Signature (ADS) has been stored into a database, such as a usage rights database.

In one embodiment, the key (K1) is derived from said ADS through a hashing mechanism.

Preferably, the key (K1) is used for generating an aggregate file F1 comprising the following information: X1, S1 and H1:
Wherein:
X1: comprises the document D1 to be downloaded, encrypted with said key K1;
S1 comprising a first non encrypted field (PS1) and a second field pS1 encrypted with said key K1.
H1: is a hash of X1, S1

In one embodiment, the downloaded file is a text file, a PDF file, a word file, an audio or a video file, or a multimedia file, which can be opened in a web browser for instance.

Alternatively, the digital file is an electronic mail which can only be opened in the appropriate electronic mail software application running in the machine having the Authentication Digital Signature (ADS)

The invention also provides a process which is performed in a server, and which can be used for communicating digital files to an Information Handling System (IHS), the IHS comprising a set of hardware and software components operated by an Operating System (OS) through drivers.

The process involves the steps of:
- receiving a download request into said server from one user;
- launching into said IHS system a system detection procedure for the purpose of gathering data from said components through said drivers and reported to said OS;
- generating a system description file from part or whole of the data gathered from said system detection procedure;
- encrypting part or whole of said system description file in order to generate a Authentication Digital Signature (ADS) uniquely identifying said system;
- generating a first encryption key (K1) from said ADS;
- generating, in response to said request for download, an aggregate file F1 comprising the following fields: X1, S1 and H1;
Wherein
X1 is the digital file (D1) encrypted with said key;
S1 are settings comprising two fields:
- a first field PS1 being public and not encrypted;
- a second field pS1 being private and encrypted by said key;
H1 being a hash of X1, S1.

In one embodiment, the server is associated with a database of usage rights and restrictions rules applied to a list of predetermined users, and involves the steps of:
- receiving a download request into said server from one user;
- accessing a data base comprising a list of predetermined users associated with restriction rules or usage rights applied to said users;
- if said user requesting the downloading of one digital file is not listed into said database, then launching into said IHS system a system detection procedure for the purpose of gathering data from said components through said drivers and reported to said OS;
- generating a system description file from part or whole of the data gathered from said system detection procedure;
- encrypting part or whole of said system description file in order to generate a Authentication Digital Signature (ADS) uniquely identifying said system;
- if said user is listed into said database, then recovering said ADS assigned to said user;
- generating an encryption key (K1) from said ADS;
- generating, in response to said request for download, an aggregate file F1 comprising the following fields : X1, S1 and H1;
Wherein
X1 is the digital file (D1) encrypted with said key;
S1 are settings comprising two fields:
- a first field PS1 being public and not encrypted;
- a second field pS1 being private and encrypted by said key;
H1 being a hash of X1, S1.

At last, the invention achieves a process to be executed into an IHS system for downloading and exploiting the aggregate file F1 communicated by the above server.
- receiving said downloaded aggregated file F1;
- launching into said IHS system a Document Control process involving the steps of:
   - performing into said IHS system a system detection procedure for the purpose of gathering data from said components through said drivers and reported to said OS;
   - generating a system description file from part or whole of the data gathered from said system detection procedure;
   - encrypting part or whole of said system description file in order to generate a Authentication Digital Signature (ADS) uniquely identifying said system;
   - generating a second encryption key (K2) from said ADS;
   - decrypting said private field (pS1) of said aggregate file with said second key;
   - decrypting X1 with said second key and opening said document (D1) in accordance with usage rights and restrictions rules applied to said user.

It can be seen again, and this is a great advantage of the present invention with respect to the above mentioned prior art European patent application (EP1669833) that there is absolutely no need to communicate the encryption key (K1), since the latter is directly computed within the machine, nor is it necessary to perform any comparison between signatures (a reference signature and a current signature) which would weaken the level of security.

In one embodiment, once opened, the digital file F1 is loaded with restrictions complying with usage rights included into the S1 field and extracted from the usage rights database.

The invention also provides a IHS system fitted with means for performing the process above defined.

### Description of the drawings

An embodiment of the invention will now be described, by way of example only, with reference to the accompanying drawings, wherein:
Figure 1 illustrates one embodiment of a typical Information Handling System (IHS) communicating with a distant server providing access to digital files.
Figure 2 illustrates one embodiment of a process executed for register the client into the usage rights database or for updating said database.
Figure 3 illustrates one embodiment of a process which is executed within the server.
Figure 4 illustrates one embodiment of a process which is executed within the local IHS machine.
Figure 5 illustrates a second embodiment of a process executed within the server which does not require the use of a usage and rights database listing the clients.
Figure 6 illustrates the architecture of one generic system which includes components providing CID and CDD data used for generating the Digital DNA information.
Figure 7 illustrates an example of the gathering of data for two particular USB devices.

### Description of the preferred embodiment of the invention

There will now be described new and improved procedures for enhancing the protection of digital files being transmitted and disseminated throughout a network, such as an intranet network or the Internet network, and downloaded into a local system.

Generally speaking the local system may be any Information Handling System (IHS) or device which is equipped with processing resources. This clearly includes, without any limitation, desktop computers, portable computers and laptops, hand-held or pocket PC's also known as Personal Digital Assistant (P.D.A.), and even the latest mobile phones which are now fitted with processing resources as well as an operating system (such as Windows CE or iPhone or Google Android for instance).

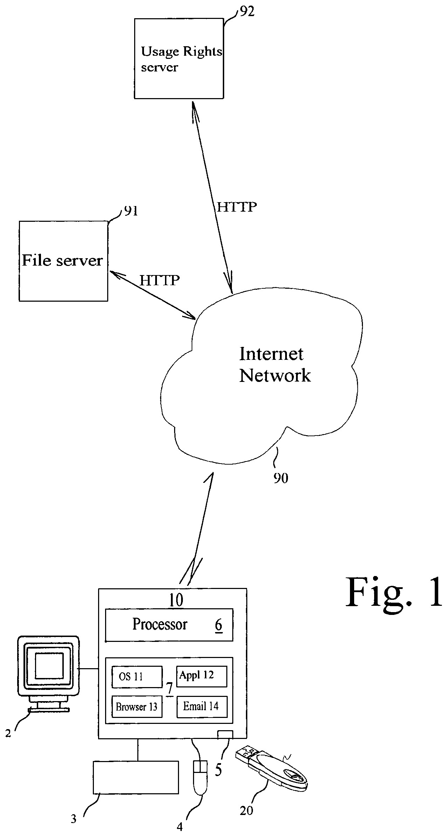

Figure 1 illustrates a first example showing a conventional IHS system 10 comprising a processor 6, fitted with RAM storage 7 where an dedicated Operating System (OS) 11 - for instance Windows from Microsoft Corp. or Linux or alike, wherein software applications 12 may run. In addition to such applications, the system includes a web browser 13 (such as Internet Explorer from Microsoft Inc.) and a electronic mail facility software 14 (such as Outlook from the same manufacturer).

In addition, the system 10 may be associated with well known I/O components, such as a display 2, a keyboard 3, a mouse 4 and other peripherals such as a USB key 20 cooperating with a USB plug 5.

The system further includes means for achieving communications, for instance complying to the TCP/IP protocols and particularly the well known Hyper Text Transfer Protocol (HTTP) or the secured version HTTPS, for communicating with an intranet or Internet network, represented by numeral 90 in Figure 1, so as to access to a distant file server 91 and a Usage rights server 92. Clearly, servers 91 and 92 may be incorporated in a same server or may be arranged in different physical entities. Similarly, server 91 may be a FTP server or any other server providing access to a directory of digital files, while server 92 may be a specialized server arranging commercial transactions with users. In an alternative embodiment, three distinctive servers may be arranged, one for storing the usage rights database, one for storing the digital files, and one particular server for executing the inventive procedures and protocols described below.

Therefore, local IHS system 10 is fitted with all the means required for acceding to a distant web server 91, for instance, for the purpose of requesting the downloading of a file, be it a video, an audio or any multimedia file.

However, in order to increase the level of protection of the digital files being communicated through the network, it will now be described embodiments of processes executed between server 91 and IHS machine 10.

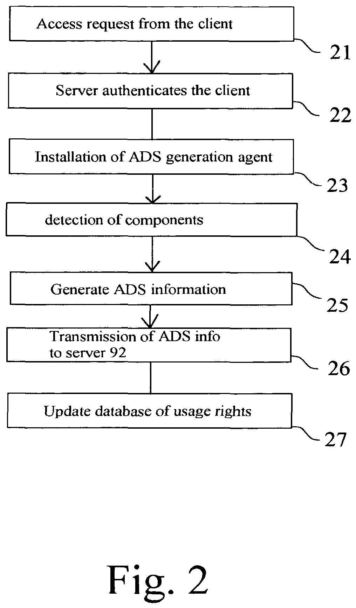

Figure 2 shows the registration preliminary process which is executed for the purpose of registering one user into a database.

The process starts with a step 21 during which the user requests access to a web page of server 92 maintaining the database of usage rights.

Then, in a step 22, the server authenticates the client, for instance by using a conventional login and password.

Then, in a step 23, a piece of code is loaded then executed on the client to generate the Authentication Digital Signature (ADS), sometimes designated under the expression *"digital DNA information"* - which uniquely identifies and authenticates the IHS system . In one preferred embodiment, this piece of code stands in a java applet installed by a browser which detects a reference to one signed java applet code into a HTML page of the server 92. In another embodiment, this piece of code stands in a browser plug-in as a Firefox™ plug-in or Microsoft ActiveX plug-in.

Once installed, the ADS generation agent causes, in a step 24, the initiating of a detection procedure for the purpose of gathering all the existing information provided by the different system components through the drivers of said components, and reported to the Operating System running in the system in accordance, for instance, with the techniques described in EP1669833 mentioned in the prior art section.

Then, in a step 25, the data being reported during the detection process is used, partly or fully, for generating a **IHS system description file** which is then encrypted, partly or fully, by means of any known encryption mechanism so as to generate a Authentication Digital Signature (ADS),.

Indeed, because of the wide variety of components, hardware and software, composing the IHS system, and each reporting significant information and data to the operating system - at least for the purpose of the drivers setup procedure - one may ensure that the Authentication Digital Signature (ADS) (*digital DNA information*) uniquely identifies the local IHS system 10.

Alternatively, the ADS signature will be limited to a very limited set of components, and even one single passive component such as a USB key or a CDROM, the ADS generated from that single component being used for encrypting the file in accordance with the procedure described below.

Then, in a step 26, the Authentication Digital Signature (ADS) (or *digital DNA information*) is transmitted via any known safe transmission process to the distant server 92, in order to be stored within the database maintained by server 92.

Then, in a step 27, the database is updated with the client Authentication Digital Signature (ADS) being associated with the considered user, together with the usage rights, possibly defined in accordance with some commercial considerations.

There will now be described the particular procedure which is executed for the purpose of downloading a file, associated with usage rights, to one particular client.

For that purpose, the Authentication Digital Signature (ADS) (*digital DNA information*) is used for deriving an encryption key which is advantageously used for the encryption/decryption of the document files in the procedure which will be described below.

Indeed, the inventors have discovered that using such digital ADS information as an encryption key allows taking benefit of the functionalities of the encryption/decryption algorithm, and particularly the fact that there is no longer any need to perform any comparison between two signatures, a current signature and a reference signature, for the purpose of allowing the transaction...

The invention therefore deviates from the teaching of EP1669833 which required the loading, into the memory of the system under check of the two signatures, so as to complete the transaction, thus weakening the level of security of the process.

With the invention, there will be no longer required to perform any comparison and, furthermore, as it will be make apparent hereinafter, there will even no longer required to exchange the encryption/decryption key.

Preferably, the encryption key is derived from the Authentication Digital Signature (ADS) (*digital DNA information*) by means of a hashing mechanism.

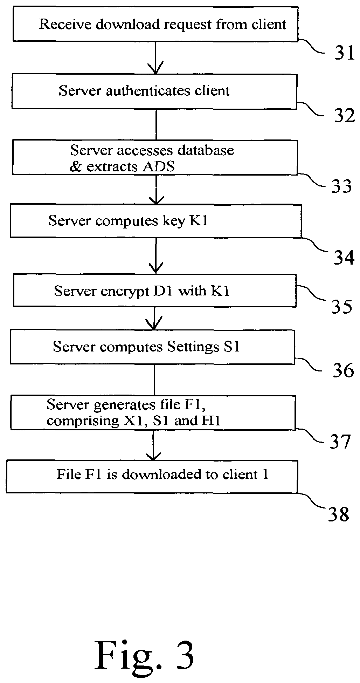

With respect to figure 3, there will now be described one particular embodiment of the process which is performed in the distant server 91 which uses the database updated in figure 2...

The process starts with a step 31 wherein the distant server 91 receives a download request from one user or client, for instance local IHS system 10, requesting the downloading of a document D1.

Then, in a step 32, the distant server authenticates the client, preferably by use of a login and a password as in the conventional authentication procedures. In one embodiment, step 32 may involve the use of the Authentication Digital Signature (ADS) (*digital DNA information*) generated in step 25 of the registration procedure, so as to provide a more complete Client Identifier using the contextual information relative to the system and, thus, a stronger authentication procedure.

Then, in a step 33, the server accesses the database of Usage Rights and restrictions rules stored on server 92 (in figure 1), and extracts the Authentication Digital Signature (ADS) (*digital DNA information*) associated to the client which is therein stored.

If the client is not listed in the above mentioned database, then the registration process described in figure 2 will be launched preliminary to the downloading process.

If the client is listed in the database, the process proceeds with a step 34 wherein server 91 computes (with a predetermined mathematical function) a cryptographic key K1 which is based on the Authentication Digital Signature (ADS) (*digital DNA information*) stored in the database. In one particular embodiment, the mathematical function is based on a hash algorithm such as SHA-1 or MD5.

Then, in a step 35, the distant server encrypts the document D1 with the key K1 . The result of this operation is called X1.

Then, in a step 36, the server generates setting information S1 comprising two distinctive fields, a first public PS1 field and a second private pS1 field.

Public field PS1 comprises public information which is not encrypted and can therefore be available to any user. Such public information PS1 may include general public information, such as the document name, the server name, a notice of copyright, when applicable, the client name, the reference (U.R.L.) of the download transaction, the date, the time etc... as well as the usage rights for document D1 associated to the client ID.

On the contrary, the private field pS1 comprises information which is encrypted with the key K1 computed in step 34. Such information may include general private information relating to document D1 (for instance the identification of the person having modified the document, at what time, the nature of the modification...), but also context properties relative to both the server and the client,
Including:
- the identification of the Server, e.g. a hash of its own Authentication Digital Signature (ADS) (*digital DNA information*)

Then in a step 37, the server generates a F1 file comprising the following aggregated information X1, S1 and H1:
Wherein:
X1: comprises the document to be downloaded, encrypted with the key K1 computed in step 34. Any known symmetric algorithm may be used for performing such encryption, eg a well known 3DES or an AES algorithm.
In addition to X1 and S1 = (PS1, pS1), the document F1 comprises a global hash H1 based on all the previous information (X1, PS1, pS1)

Then, in a step 38, the aggregate file F1 is then downloaded by the client which processes it in accordance with the procedure described in reference with figure 3.

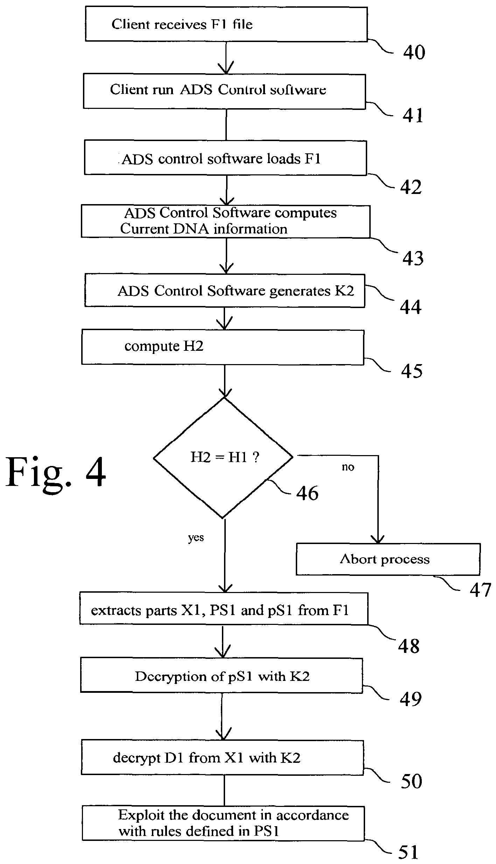

With respect to figure 4, there is now described the process which is performed in the local IHS system receiving the F1 aggregate file after the execution of the process of figure 3.

In a step 40, the local IHS system 10 or client receives the downloaded file F1.

Then , in a step 41, the client runs a specific ADS Control Software (ADSCS) for the purpose of exploiting file F1.

In one particular embodiment, ADSCS takes the form of a plug-in software associated to the browser or even to any other application software, such as an electronic mail or Adobe Acrobat Reader software.

Alternatively, the ADSCS may take the form of a java or an applet code.

Then, in a step 42, the ADS Control Software loads the downloaded file F1.

Then, in a step 43, the ADS Control Software performs the same process described with respect to steps 23-25 in order to compute the Authentication Digital Signature (ADS) (*digital DNA information*)*,* using the same algorithm and functions .

In one particular embodiment, the computation of the Authentication Digital Signature (ADS) will be limited to a limited set of components, and even one single passive component such as a USB key or a CDROM.

Then, in a step 44, the ADS Control Software computes a cryptographic key K2 with the same mathematical functional that was used to calculate K1

Then, in a step 45, the ADS Control software computes again the hash of the components X1, S1 included in file F1 so as to obtain H2.

Then, in a step 46, a test is performed in order to check whether H2 = H1

If H2 = H1, then the file has not been modified, the integrity is guaranteed and then the process continues with a step 48.

If H2 is not equal to H1, then the loading of the document is aborted in a step 47.

In step 48, the ADS control software extracts from file F1 the parts X1, PS1 and pS1.

In a step 49, the process performs a decryption process, based on the computed K2 key, of the file X1 which was previously encrypted by means of the Authentication Digital Signature (ADS) (*digital DNA information*) stored within the database. It can be seen that X1 can only be deciphered if the current digital ADS information computed in step 25 fully corresponds to the digital ADS information calculated in step 44.

Therefore, the process of the invention takes advantage of the functionality of the encryption/decryption algorithm for avoiding any comparison between a reference ADS information and a current ADS information. In particular, the encryption key based on the digital ADS information stored in the database is never stored in the IHS system, and even not included in the file F1. The process shows to be much more secure than the one which would be based on a comparison between two digital ADS information being stored somewhere in the memory of the system (as was the case in the above mentioned European patent application).

In a step 50, D1 is decrypted from X1 with K2. Again, if the key K2 is not correct, than the file can not be opened...

It should be noticed that, in the particular case where the key K1 has been computed from one limited set of components, and even one single passive component such as a USB key or a CDROM. In this particular case, the downloaded encrypted file will still be opened if the user changes his computer, but still keep his particular passive components which were used for computing the ADS signature. More basically, if one USB key was used for creating the ADS signature, this means that the downloaded file can still be opened as long as the USB key remains plugged in the hosting computer.

Then, in a step 51 the ADS control software allows the use of the document D1 in accordance with the usage rules and restrictions which are defined in PS1 field.

In particular, it allows the opening of the document D1 as many times as it is defined in PS1 field. In one particular case, considering that the user right cannot print, ADSCS will disable the print function access.

While the process of figure 3 was described in respect to the access to a database, it should be noticed that such access is not compulsory.

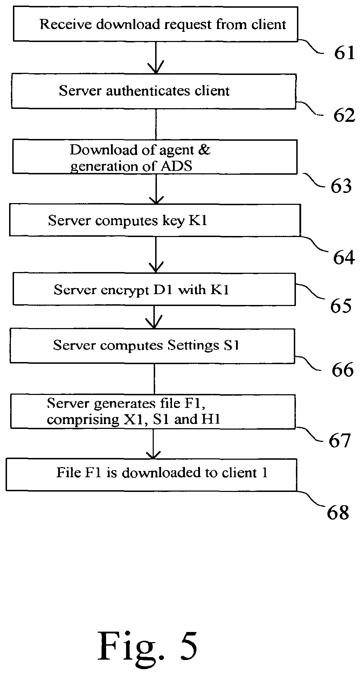

Indeed, in one embodiment, illustrated in figure 5, the server may directly perform the process of figures 2 and 3, without involving any usage rights database or server for encrypting the file (D1) and generates aggregate file F1. In that case, the usage rights, if any, will be applied by default or in accordance with commercial considerations defined in one transaction currently pending between the client and the web server.
Figure 5 illustrates the different steps comprising:
In a step 61, the server receives a download request into said server from one user. Then, in a step 62, the server authenticates the client in a similar way than for step 22 of figure 2.
Then, in a step 63, the server downloads an agent which causes the launching into said IHS system a system detection procedure for the purpose of gathering data from said components through said drivers and reported to said OS. This results in the generation of a system description file from part or whole of the data gathered from said system detection procedure. That file is encrypted for the purpose of generating a Authentication Digital Signature (ADS) uniquely identifying said system.

Then, in a step 64, the server generates a first encryption key (K1) from said ADS.

Then, in a step 65, the server encrypts the document D1 to be downloaded with the key (K1) and, in a subsequent step 66, it computes the settings S1.

The server then generates in a step 67, in response to said request for download, an aggregate file F1 comprising the following fields: X1, S1 and H1;
Wherein
X1 is the digital file (D1) encrypted with said key;
S1 are settings comprising two fields:
- a first field PS1 being public and not encrypted;
- a second field pS1 being private and encrypted by said key;
   H1 being a hash of X1, S1./

The aggregate file F1 is then downloaded by the client in a step 68, which processes it in accordance with the procedure described in reference with figure 4.

It can be seen that the process which was described above with details may be used with a wide varieties of systems and components and, furthermore, that wide variety of systems and components is a key advantage to the present invention since it guaranties the possibility to automatically generate a so-called Authentication Digital Signature (ADS) (*digital DNA information*) from the multiplicity of components, particularly detected by the Operating System (Windows, Linux or the like) and involving identification data for the drivers setup procedures.

Such mechanisms shows to be very effective since the encryption/decryption key is not made available to the users, and therefore can not be directly exchanged between them, but is automatically generated from a contextual analysis of the system receiving the downloaded digital file.

In addition, and this is a great advantage of the present invention, the process may construct the above mentioned **IHS description file** by using the so-called qualification process which was described with details in the above mentioned European patent application, the content of which being herein incorporated by simple reference which, for the sake of clarity, will be summarized hereinafter.

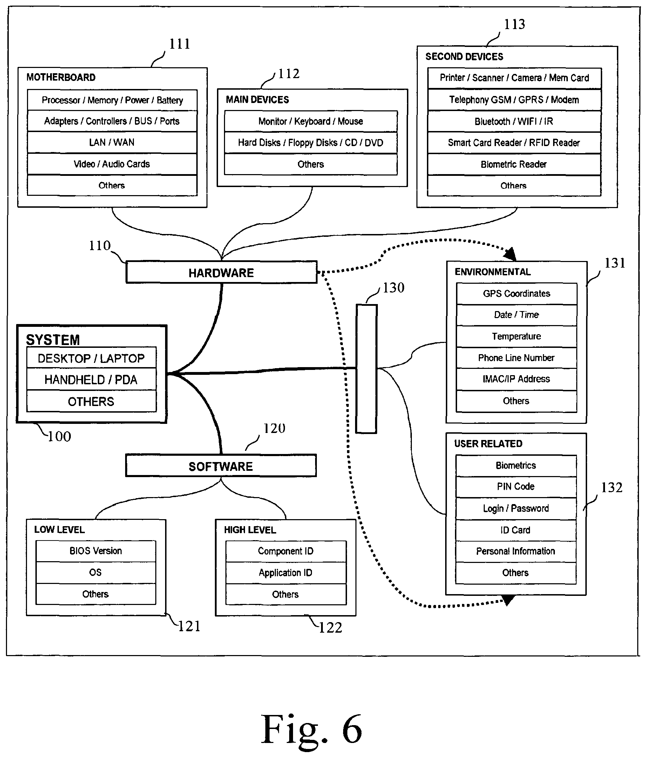

With respect to figure 6, there is illustrated the structural architecture of a general system 100 which, in the preferred embodiment, is a desktop or a laptop computer or any handheld/PDA computer or mobile telephone fitted with hardware components 110 and software elements. Hardware components include a motherboard 111 fitted with a processor, memory, power and battery equipments, and a set of adapters or controllers as well as Input /output buses and ports. The motherboard cooperates with specialized adapters, such as Local Area Network (L.A.N.) or Wide Area Network (W.A.N) cards, or any specialized cards or adapters (video or audio) providing specialized functions and processing capabilities.

In addition to the mother board, the system 100 further includes a set of external devices, such as the traditional main devices 112, ie the well known display-keyboard-mouse equipment and some storage facilities (hard disks, floppy disks, Cdrom or DVD rom drives etc...). The system may further include secondary devices 113 attached to the mother board via appropriate I/O ports, ie a printer, a scanner, video and photo equipments, communication devices (Bluetooth, WIFI, Infrared, telephony GSM-GPRS, modem), and even more specialized devices, such as a radio frequency identification (RFID) reader, a biometric reader and, more generally, any other equipment which is likely to be a source of information.

System 100 is operated under the control of software code, which is organized in low-level code 121 - the known Basic Input Output System (BIOS) code cooperating with the Operating System (O.S.) and higher level code including special software components and applications. In the preferred embodiment of the invention, system 100 is operated under the well known WINDOWS (TM) operating system marketed by MICROSOFT Corp. A hand-held computer can be equipped with the WINDOWS CE (Trademark of Microsoft Comp.) operating system designed for pocket PCs. Clearly, the skilled man will adapt the invention to any alternate operating system, such as LINUX or PalmOS (TM) for instance.

Considering now more particularly the information which system 100 may access through its general purpose and more specialized devices, it can be seen that system 100 is given access, via interface 130, to a wide range of information, such as contextual or environmental information 131 as well as user related information 132. Environment information 131 may be , without any limitation, information regarding Global Positioning System (G.P.S.), the date and the time, the relevant temperature of the room wherein the system is being operated, the phone line number provided by the modem adapter, the Media Access Control (MAC)/IP address assigned by the network adapter ..... User related information 132 may include data such as biometric data, PIN code, login-password, ID card or any personal information provided by the user....

Every component within system 100 is being identified, registered and validated prior to the transaction or prior to accessing to any secured service. In the frame of the subject invention, a *component* - is understood to encompass hardware and software element which are constituents of the system. More precisely, a component is a constitutive element of a system. It can be a built-in card (mother board, network adapter card), a microprocessor chip, a memory chip, a hard disk... More generally, a peripheral device (biometric reader) and a software component or application program is considered to be a component.

In the preferred embodiment of the invention, every component is associated to *component* data which includes, without limitation, Component Identification Data (CID) and Component Contextual Data (CCD).

Component Identification Data (CID) is an identifier which uniquely identifies the component itself. Clearly, it can be any unique alphanumerical string which identifies the corresponding component, be it hardware or software.

It should be noticed that, in the technical field of computers, it is common practice to the product manufacturers and to the providers of individual parts to assign references which individually identify one particular element. For instance, each processor has a unique serial number; each installed software (under Windows (TM) for example) (or software component as Active X) has a Globally Unique Identifier (GUID) and/or a ClaSs IDentifier (CLSID). For the software GUID/CLSID, there could be no collision between two identifiers as they are building up to be unique in an OS. For the hardware components, a Computer ID could be created by concatenating the identifier of the manufacturer, the identifier of the model and the serial number of the component itself. Clearly, the skilled man will adapt the invention to any alternate operating system, such as LINUX.

Such identifiers are particularly used for permitting the different drivers corresponding to the different devices to be installed within a given operating system, for instance the Windows (TM) type operating system. This is very advantageous because the high number of components existing in the system results in a high volume of data (automatically collected) for generating the contextual ADS information.

In addition to Component Identification Data, the Component data further includes a Component Contextual Data (CCD) which does not identify the component itself but are the data returned by the component when it is in used. For instance, the CCD is the GPS coordinates on a specific request provided by a GPS device component. CID and CDD data may be combined for creating a complex contextual identification reference which will be used for authorizing or denying the access to the system 100.

The identification procedure which was summarized above, and which allows the automatic gathering of a comprehensive information regarding (CID, CCD) reported by the different components of the system, including the data made available to the OS for the installation procedure of the drivers, allow the generation of a digital ADS information taking the form, in one embodiment, of a System Qualification File, e.g. an eXtended Markup Language (XML) file.

As explained in the above mentioned European patent application, the SQF file presents a structured organization storing data corresponding to the different components detected within system 100, including the Component Identification Data (CID) and, possibly, the Component Contextual Data (CCD) which can be returned by one or more particular component.

Once generated, the SQF file is encrypted to generate a system Qualification signature (SQS) which can be compared to a reference signature prior to validating any transaction.

In the present invention, the SQS file is now used as the so-called *digital DNA information,* and is hashed so as to provide an encryption key which can be used in accordance with the process described in reference to figures 2 and 3, and thus allowing protection of a downloading file and its legitimate use in accordance with predetermined usage rights.

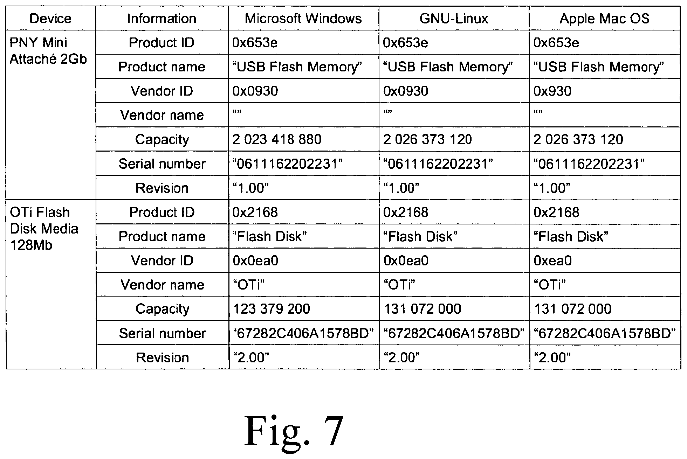

With respect to figure 7, there is illustrated an example of the information which can be gathered, respectively by three operating systems (MICROSOFT WINDOWS, GNU-LINUX, APPLE MAC) reported from two examples of USB devices, such as a PNY Mini Attaché 2Gb and a OTi Flash Disk Media.

### Application of the invention

The invention may find applications in many different ways..

In one embodiment, the procedures described above may be executed by a plug-in of the pre-existing web browser so as to provide an enhanced browsing tool allowing reading of the files downloaded by the server 91.

Alternatively, the invention may be embodied by means of a plug-in of an electronic mail software for the purpose

More generally, the invention can be advantageously used for providing protection to the following categories of documents:
- a text file, a PDF file, an office automation file (text, Microsoft Word, Microsoft Excel,
   Open Office Writer,...)
- A HTML web page
- an audio file (MP3...)
- a video file (avi...)
Etc...

As will be appreciated by one of skill in the art, the present invention may be embodied as a method, data processing system or program product. Accordingly, the present invention may take the form of an entirely hardware embodiment, an entirely software embodiment or an embodiment combining software and hardware aspects. Furthermore, the present invention may take the form of a computer program product on a computer-readable storage medium having computer-readable program code means embodied in the medium. Any suitable computer-readable medium may be utilized including hard disks, CD-ROMs, optical storage devices, or magnetic storage devices.

The present invention is described below with reference to flowchart illustrations of methods, apparatus (systems) and computer program products according to the invention. It will be understood that each block of the flowchart illustrations, and combinations of blocks in the flowchart illustrations, can be implemented by computer program instructions. These computer program instructions may be loaded onto a computer or other programmable data processing apparatus to produce a machine, such that the instructions which execute on the computer or other programmable data processing apparatus create means for implementing the functions specified in the flowchart block or blocks. These computer program instructions may also be stored in a computer-readable memory that can direct a computer or other programmable data processing apparatus to function in a particular manner, such that the instructions stored in the computer-readable memory produce an article of manufacture including instruction means which implement the function specified in the flowchart block or blocks. The computer program instructions may also be loaded onto a computer or another programmable data processing apparatus to cause a series of operational steps To be performed on the computer or other programmable apparatus to produce a computer implemented process such that the instructions which execute on the computer or the other programmable apparatus provide steps for implementing the functions specified in the flowchart block or blocks.

Accordingly, blocks of the flowchart illustrations support combinations of means for performing the specified functions, combinations of steps for performing the specified functions and program instruction means performing the specified functions. It will also be understood that each block of the flowchart illustrations, and combinations of blocks in the flowchart illustrations, can be implemented by special purpose hardware or computer systems which perform the specified functions or combinations of special purpose hardware and computer instructions.

## Claims

1. Process for communicating a digital file (D1) from a server to an Information Handling System (IHS), the IHS comprising a set of hardware and software components operated by an Operating System (OS) through drivers; Said process involving the steps of:
- initiating of a system detection procedure for the purpose of gathering data from said components through said drivers and reported to said OS;
- generating a system description file from part or whole of the data gathered from said system detection procedure;
- encrypting part or whole of said system description file in order to generate a Authentication Digital Signature (ADS);
- using said Authentication Digital Signature (ADS) for deriving an encryption /decryption key (K1);
- using said key for encrypting a file to be downloaded or for decrypting an encrypted file being downloaded.

2. Process according to claim 1, **characterized in that** said ADS signature is computed from the data reported by a limited set of devices connected to said HIS system.

3. Process according to claim 2, **characterized in that** said ADS signature is computed from one single USB device, such as a USB storage device.

4. Process according to claims 1, **characterized in that** said Authentication Digital Signature is stored into a database comprising usage rights and restrictions rules associated to a list of users.

5. Process according to anyone of claims 1 to 4, **characterized in that** said key (K1) is derived from said ADS through a hashing mechanism.

6. Process according to claims 1 to 5 **characterized in that** said key (K1) is used for generating an aggregate file F1 comprising the following information: X1, S1 and H1:
Wherein:
X1: comprises the document D1 to be downloaded, encrypted with said key K1;
S1 comprising a first non encrypted field (PS1) and a second field pS1 encrypted with said key K1.
H1: is a hash of X1, S1

7. Process according to anyone of claim 1 to 6 **characterized in that** said downloaded file is a text file, a PDF file, a word file, an audio or a video file, or a multimedia file.

8. Process according to anyone of claims 1 to 7 **characterized in that** said server is a pop server and that said process is executed in an electronic mail application software, such as Outlook.

9. Process for communicating a file (D1) from a server to an Information Handling System (IHS), the IHS comprising a set of hardware and software components operated by an Operating System (OS) through drivers, said process involving the steps of:
- receiving a download request into said server from one user;
- launching into said IHS system a system detection procedure for the purpose of gathering data from said components through said drivers and reported to said OS;
- generating a system description file from part or whole of the data gathered from said system detection procedure;
- encrypting part or whole of said system description file in order to generate a Authentication Digital Signature (ADS) uniquely identifying said system;
- generating a first encryption key (K1) from said ADS;
- generating, in response to said request for download, an aggregate file F1 comprising the following fields: X1, S1 and H1;
Wherein
X1 is the digital file (D1) encrypted with said key;
S1 are settings comprising two fields:
- a first field PS1 being public and not encrypted;
- a second field pS1 being private and encrypted by said key;
H1 being a hash of X1, S1.

10. Process for communicating a file (D1) from a server to an Information Handling System (IHS), the IHS comprising a set of hardware and software components operated by an Operating System (OS) through drivers, said process involving the steps of:
- receiving a download request into said server from one user;
- accessing a data base comprising a list of predetermined users associated with restriction rules or usage rights applied to said users;
- if said user requesting the downloading of one digital file is not listed into said database, then launching into said IHS system a system detection procedure for the purpose of gathering data from said components through said drivers and reported to said OS;
- generating a system description file from part or whole of the data gathered from said system detection procedure;
- encrypting part or whole of said system description file in order to generate a Authentication Digital Signature (ADS) uniquely identifying said system;
- if said user is listed into said database, then recovering said ADS assigned to said user;
- generating an encryption key (K1) from said ADS;
- generating, in response to said request for download, an aggregate file F1 comprising the following fields: X1, S1 and H1;
Wherein
X1 is the digital file (D1) encrypted with said key;
S1 are settings comprising two fields:
- a first field PS1 being public and not encrypted;
- a second field pS1 being private and encrypted by said key;
H1 being a hash of X1, S1.

11. Process executed in an IHS system for downloading and exploiting the file communicated in accordance with the process of claims 9 or 10, said process involving the steps of:
- receiving said downloaded aggregated file F1;
- launching into said IHS system a Document Control process involving the steps of:
- performing into said IHS system a system detection procedure for the purpose of gathering data from said components through said drivers and reported to said OS;
- generating a system description file from part or whole of the data gathered from said system detection procedure;
- encrypting part or whole of said system description file in order to generate a Authentication Digital Signature (ADS) uniquely identifying said system;
- generating a second encryption key (K2) from said ADS;
- decrypting said private field (pS1) of said aggregate file with said second key;
- decrypting X1 with said second key and opening said document (D1) in accordance with usage rights and restrictions rules applied to said user.

12. Process according to anyone of claims 1 to 4 **characterized in that** said public control information defines restrictions rules relative to one of the following function:
- READ the file;
- READ the file for a predetermined number of times;
- PRINT the file
- PRINT the file for a predetermined number of times;
- PRINT the file with a specific "filigree" shade;
- COPY the file.

13. Information Handling System comprising a set of hardware and software components operated by an Operating System (OS) through drivers and further comprising communication means for communicating with a server, said system comprising:
- means for initiating of a system detection procedure for the purpose of gathering data from said components through said drivers and reported to said OS;
- means for generating a system description file from part or whole of the data gathered from said system detection procedure;
- means for encrypting part or whole of said system description file in order to generate a Authentication Digital Signature (ADS) ;
- means for using said Authentication Digital Signature (ADS) for deriving a first encryption/decryption key (K1);
- means for using said key for encrypting a file to be downloaded or for decrypting an encrypted file being downloaded.

14. HIS system according to claim 13 further including:
- means for receiving said downloaded aggregated file F1 comprising the following fields : X1, S1 and H1;
Wherein
X1 is the digital file (D1) encrypted with said key;
S1 are settings comprising two fields:
- a first field PS1 being public and not encrypted;
- a second field pS1 being private and encrypted by said key;
H1 being a hash of X1, S1;
- means for performing into said IHS system a system detection procedure for the purpose of gathering data from said components through said drivers and reported to said OS;
- means generating a system description file from part or whole of the data gathered from said system detection procedure;
- means for encrypting part or whole of said system description file in order to generate a Authentication Digital Signature (ADS) uniquely identifying said system;
- means for generating a second encryption key (K2) from said ADS, said second key (K2) being used for decrypting said private field (pS1) of said aggregate file with said second key;
- means for decrypting X1 with said second key and opening said document (D1) in accordance with usage rights and restrictions rules applied to said user.
- means for opening said document (D1) in accordance with usage rights defined in said S1 field.

15. A security computer program for securing the downloaded of a digital file, said security computer program product having program code elements for carrying out a method as claimed in any of claims 1 to 12.

## Patentansprüche

1. Verfahren zur Übertragung einer digitalen Datei (D1) von einem Server an ein Informationsverarbeitungssystem (IHS), wobei das IHS einen Satz von Hardware- und Softwarekomponenten umfasst, die von einem Betriebssystem (OS) über Treiber betrieben werden;
wobei das Verfahren die folgenden Schritte umfasst:
- Auslösen eines Systemnachweisprozesses zum Zweck des Sammelns von Daten von den Komponenten über die Treiber und gemeldet an das OS;
- Erzeugen einer Systembeschreibungsdatei von einem Teil der oder den gesamten Daten, die von dem Systemnachweisprozess gesammelt werden;
- Verschlüsseln eines Teils oder des Ganzen der Systembeschreibungsdatei, um eine digitale Authentifizierungssignatur (ADS) zu erzeugen,
- Verwenden der digitalen Authentifizierungssignatur (ADS), um einen Verschlüsselungs-/Entschlüsselungsschlüssel (K1) abzuleiten;
- Verwenden des Schlüssels, um eine Datei zu verschlüsseln, die heruntergeladen werden soll, oder um eine verschlüsselte Datei zu entschlüsseln, die heruntergeladen wird.

2. Verfahren nach Anspruch 1, **dadurch gekennzeichnet, dass** die ADS-Signatur aus den Daten berechnet wird, die von einem begrenzten Satz von Vorrichtungen gemeldet wird, der mit dem IHS-System verbunden ist.

3. Verfahren nach Anspruch 2, **dadurch gekennzeichnet, dass** die ADS-Signatur aus einer einzigen USB-Vorrichtung wie z. B. einer USB-Speichervorrichtung berechnet wird.

4. Verfahren nach Anspruch 1, **dadurch gekennzeichnet, dass** die digitale Authentifizierungssignatur in einer Datenbank gespeichert ist, umfassend Verwendungsrechte und Beschränkungsregeln, die mit einer Liste von Benutzern assoziiert sind.

5. Verfahren nach einem der Ansprüche 1 bis 4, **dadurch gekennzeichnet, dass** der Schlüssel (K1) von der ADS über einen Hashing-Mechanismus abgeleitet wird.

6. Verfahren nach Anspruch 1 bis 5, **dadurch gekennzeichnet, dass** der Schlüssel (K1) verwendet wird, um eine Sammeldatei F1 zu erzeugen, umfassend die folgende Information: X1, S1 und H1:
wobei:
X1: das Dokument D1 umfasst, das heruntergeladen werden soll, verschlüsselt mit dem Schlüssel K1;
S1 ein erstes nicht verschlüsseltes Feld (PS1) und ein zweites Feld pS1 umfasst, das mit dem Schlüssel K1 verschlüsselt ist.
H1: ein Hash von X1, S1 ist.

7. Verfahren nach einem der Ansprüche 1 bis 6, **dadurch gekennzeichnet, dass** die heruntergeladene Datei eine Textdatei, eine PDF-Datei, eine Word-Datei, eine Audio- oder Videodatei oder eine Multimediadatei ist.

8. Verfahren nach einem der Ansprüche 1 bis 7, **dadurch gekennzeichnet, dass** der Server ein Pop-Server ist, und dass das Verfahren auf einer E-Mail-Anwendungssoftware wie z. B. Outlook ausgeführt wird.

9. Verfahren zur Übertragung einer digitalen Datei (D1) von einem Server an ein Informationsverarbeitungssystem (IHS), wobei das IHS einen Satz von Hardware- und Softwarekomponenten umfasst, die von einem Betriebssystem (OS) über Treiber betrieben werden; wobei das Verfahren die Schritte einschließt:
- Empfangen einer Herunterladeanfrage in den Server von einem Benutzer;
- Starten in das IHS-System eines Systemnachweisverfahrens für den Zweck des Sammelns von Daten von den Komponenten über die Treiber und gemeldet an das OS;
- Erzeugen einer Systembeschreibungsdatei von einem Teil der oder den gesamten Daten, die von dem Systemnachweisprozess gesammelt werden;
- Verschlüsseln eines Teils oder des Ganzen der Systembeschreibungsdatei, um eine digitale Authentifizierungssignatur (ADS) zu erzeugen, die das System eindeutig identifiziert;
- Erzeugen eines ersten Verschlüsselungsschlüssels (K1) aus dem ADS;
- Erzeugen, in Antwort auf die Herunterladeanfrage, einer Sammeldatei F1, umfassend die folgenden Felder: X1, S1 und H1:
wobei
X1 die digitale Datei (D1) ist, die mit dem Schlüssel verschlüsselt ist;
- S1 Einstellungen sind, die zwei Felder umfassen:
- ein erstes Feld PS1, das öffentlich und nicht verschlüsselt ist;
- ein zweites Feld pS1, das privat und mit dem Schlüssel verschlüsselt ist;
wobei H1 ein Hash von X1, S1 ist.

10. Verfahren zur Übertragung einer Datei (D1) von einem Server an ein Informationsverarbeitungssystem (IHS), wobei das IHS einen Satz von Hardware- und Softwarekomponenten umfasst, die von einem Betriebssystem (OS) über Treiber betrieben werden, wobei das Verfahren die Schritte einschließt:
- Empfangen einer Herunterladeanfrage in den Server von einem Benutzer;
- Zugreifen auf eine Datenbank, die eine Liste von vorbestimmten Benutzern umfasst, die mit Beschränkungsregeln oder Benutzungsrechten assoziiert sind, die auf die Benutzer angewendet werden,
- wenn ein Benutzer, der das Herunterladen einer digitalen Datei anfragt, nicht in der Datenbank aufgelistet ist, dann Starten in dem IHS-System eines Systemmachweisverfahrens zum Zweck des Sammelns von Daten von den Komponenten über die Treiber und gemeldet an das OS;
- Erzeugen einer Systembeschreibungsdatei von einem Teil der oder den gesamten Daten, die von dem Systemnachweisprozess gesammelt werden;
- Verschlüsseln eines Teils oder des Ganzen der Systembeschreibungsdatei, um eine digitale Authentifizierungssignatur (ADS) zu erzeugen, die das System eindeutig identifiziert;
- wenn der Benutzer in der Datenbank aufgelistet ist, dann Wiedergewinnen der ADS, die dem Benutzer zugewiesen ist,
- Erzeugen eines Verschlüsselungsschlüssels (K1) aus dem ADS;
- Erzeugen, in Antwort auf die Herunterladeanfrage, einer Sammeldatei F1, die die folgenden Felder umfasst: X1, S1 und H1;
wobei
X1 die digitale Datei (D1) ist, die mit dem Schlüssel verschlüsselt ist;
S1 Einstellungen sind, die zwei Felder umfassen:
- ein erstes Feld PS1, das öffentlich und nicht verschlüsselt ist;
- ein zweites Feld pS1, das privat und mit dem Schlüssel verschlüsselt ist; wobei H1 ein Hash von X1, S1 ist.

11. Verfahren, das auf einem IHS-System übergeführt ist, zum Herunterladen und Nutzen der Datei, die in Übereinstimmung mit dem Verfahren nach Anspruch 9 oder 10 übertragen wurde, wobei das Verfahren die Schritte einschließt:
- Empfangen der heruntergeladenen Sammeldatei F1;
- Starten in das IHS-System eines Dokumentkontrollverfahrens, das die Schritte einschließt:
- Durchführen in dem IHS-System eines Systemnachweisverfahrens zum Zweck des Sammelns von Daten von den Komponenten über die Treiber und gemeldet an das OS;
- Erzeugen einer Systembeschreibungsdatei von einem Teil der oder den gesamten Daten, die von dem Systemnachweisprozess gesammelt werden;
- Verschlüsseln eines Teils oder des Ganzen der Systembeschreibungsdatei, um eine digitale Authentifizierungssignatur (ADS) zu erzeugen, die das System eindeutig identifiziert;
- Erzeugen eines Verschlüsselungsschlüssels (K2) aus dem ADS;
- Entschlüsseln des privaten Felds (pS1) der Sammeldatei mit dem zweiten Schlüssel;
- Entschlüsseln von X1 mit dem zweiten Schlüssel und Öffnen des Dokuments (D1) in Übereinstimmung mit Benutzungsrechten und Einschränkungsregeln, die auf den Benutzer angewendet werden.

12. Verfahren nach einem der Ansprüche 1 bis 4, **dadurch gekennzeichnet, dass** die öffentliche Kontrollinformation Einschränkungsregeln mit Bezug auf eine der folgenden Funktionen definiert:
- LESEN der Datei;
- LESEN der Datei eine vorbestimmte Anzahl von Malen;
- DRUCKEN der Datei
- DRUCKEN der Datei eine vorbestimmte Anzahl von Malen;
- DRUCKEN der Datei mit einem spezifischen "Filigran"-Schatten;
- KOPIEREN der Datei.

13. Informationsverarbeitungssystem,
umfassend einen Satz von Hardware- und Softwarekomponenten, betrieben von einem Betriebssystem (OS) über Treiber und weiter umfassend Kommunikation zur Kommunikation mit einem Server, wobei das System umfasst:
- Mittel zum Auslösen eines Systemnachweisprozesses zum Zweck des Sammelns von Daten von den Komponenten über die Treiber und gemeldet an das OS;
- Mittel zum Erzeugen einer Systembeschreibungsdatei von einem Teil der oder den gesamten Daten, die von dem Systemnachweisprozess gesammelt werden;
- Mittel zum Verschlüsseln eines Teils oder des Ganzen der Systembeschreibungsdatei, um eine digitale Authentifizierungssignatur (ADS) zu erzeugen,
- Mittel zum Verwenden der digitalen Authentifizierungssignatur (ADS), um einen Verschlüsselungs-/Entschlüsselungsschlüssel (K1) abzuleiten;
- Mittel zum Verwenden des Schlüssels, um eine Datei zu verschlüsseln, die heruntergeladen werden soll, oder eine verschlüsselte Datei zu entschlüsseln, die heruntergeladen wird.

14. HIS-System nach Anspruch 13, weiter umfassend:
- Mittel zum Empfangen der heruntergeladenen Sammeldatei F1, umfassend die folgenden Felder: X1, S1 und H1;
wobei
X1 eine digitale Datei (D1) ist, die mit dem Schlüssel verschlüsselt ist;
S1 Einstellungen sind, die zwei Felder umfassen:
- ein erstes Feld PS1, das öffentlich und nicht verschlüsselt ist;
- ein zweites Feld pS1, das privat und mit dem Schlüssel verschlüsselt ist; wobei H1 ein Hash von X1, S1 ist;
- Mittel zum Durchführen in das IHS-System eines Systemnachweisverfahrens zum Zweck des Sammelns von Daten von den Komponenten über die Treiber und gemeldet an das OS;
- Mittel zum Erzeugen einer Systembeschreibungsdatei von einem Teil der oder den gesamten Daten, die von dem Systemnachweisprozess gesammelt werden;
- Mittel zum Verschlüsseln eines Teils oder des Ganzen der Systembeschreibungsdatei, um eine digitale Authentifizierungssignatur (ADS) zu erzeugen, die das System eindeutig zu identifiziert;
- Mittel zum Erzeugen eines zweiten Verschlüsselungsschlüssels (K2) aus dem ADS; wobei der zweite Schlüssel (K2) verwendet wird, um das private Feld (pS1) der Sammeldatei mit dem zweiten Schlüssel zu entschlüsseln;
- Mittel zum Entschlüsseln von X1 mit dem zweiten Schlüssel und Öffnen des Dokuments (D1) in Übereinstimmung mit Benutzungsrechten und Einschränkungsregeln, die auf den Benutzer angewendet werden,
- Mittel zum Öffnen des Dokuments (D1) in Übereinstimmung mit Verwendungsrechten, die in dem S1-Feld definiert sind.

15. Sicherheits-Computerprogramm zum Sichern der heruntergeladenen digitalen Datei, wobei das Sicherheits-Computerprogrammprodukt Programmcodeelemente aufweist, um ein Verfahren nach einem der Ansprüche 1 bis 12 durchzuführen.

## Revendications

1. Procédé de communication d'un fichier numérique (D1), d'un serveur à un système de gestion d'informations (IHS), le système IHS comprenant un ensemble de composants matériels et logiciels exploités par un système d'exploitation (OS) par l'intermédiaire de pilotes ;
ledit procédé impliquant les étapes ci-dessous :
- initier une procédure de détection système à des fins de collecte de données à partir desdits composants par l'intermédiaire desdits pilotes, et de signalement desdites données audit système d'exploitation ;
- générer un fichier de description système à partir de tout ou partie des données collectées dans le cadre de ladite procédure de détection système ;
- chiffrer tout ou partie dudit fichier de description système afin de générer une signature numérique d'authentification (ADS) ;
- utiliser ladite signature numérique d'authentification (ADS) en vue de dériver une clé de chiffrement/déchiffrement (K1) ;
- utiliser ladite clé en vue de chiffrer un fichier à télécharger ou de déchiffrer un fichier chiffré en cours de téléchargement.

2. Procédé selon la revendication 1, **caractérisé en ce que** ladite signature ADS est calculée à partir des données signalées par un ensemble limité de dispositifs connectés audit système IHS.

3. Procédé selon la revendication 2, **caractérisé en ce que** ladite signature ADS est calculée à partir d'un unique dispositif USB, tel qu'un dispositif de stockage USB.

4. Procédé selon la revendication 1, **caractérisé en ce que** ladite signature numérique d'authentification est stockée dans une base de données comprenant des droits d'utilisation et règles de restriction associés à une liste d'utilisateurs.

5. Procédé selon l'une quelconque des revendications 1 à 4, **caractérisé en ce que** ladite clé (K1) est dérivée de ladite signature ADS par le biais d'un mécanisme de hachage.

6. Procédé selon l'une quelconque des revendications 1 à 5, **caractérisé en ce que** ladite clé (K1) est utilisée en vue de générer un fichier agrégé F1 comprenant les champs d'informations suivants : X1, S1 et H1 :
dans lequel :
X1 : comprend le document D1 à télécharger, chiffré avec ladite clé K1 ;
S 1 : comprend un premier champ non chiffré (PS1) et un second champ pS 1 chiffré avec ladite clé K1.
H1 : est un hachage de X1, S1.

7. Procédé selon l'une quelconque des revendications 1 à 6, **caractérisé en ce que** ledit fichier téléchargé est un fichier texte, un fichier PDF, un fichier Word, un fichier audio, un fichier vidéo, ou un fichier multimédia.

8. Procédé selon l'une quelconque des revendications 1 à 7, **caractérisé en ce que** ledit serveur est un serveur de protocole POP et **en ce que** ledit procédé est exécuté dans un logiciel d'application de messagerie électronique, Outlook par exemple.

9. Procédé de communication d'un fichier (D1), d'un serveur à un système de gestion d'informations (IHS), le système IHS comprenant un ensemble de composants matériels et logiciels exploités par un système d'exploitation (OS) par l'intermédiaire de pilotes, ledit procédé comprenant les étapes ci-dessous :
- recevoir une demande de téléchargement sur ledit serveur en provenance d'un utilisateur ;
- lancer, dans ledit système IHS, une procédure de détection système, à des fins de collecte de données à partir desdits composants par l'intermédiaire desdits pilotes et de signalement desdites données audit système d'exploitation ;
- générer un fichier de description système à partir de tout ou partie des données collectées dans le cadre de ladite procédure de détection système ;
- chiffrer tout ou partie dudit fichier de description système afin de générer une signature numérique d'authentification (ADS) identifiant de manière unique ledit système ;
- générer une première clé de chiffrement (K1) à partir de ladite signature ADS ;
- générer, en réponse à ladite demande de téléchargement, un fichier agrégé F1 comprenant les champs suivants : X1, S1 et H1 ;
dans lequel :
X1 est le fichier numérique (D1) chiffré avec ladite clé ;
S1 correspond à des paramétrages comprenant deux champs :
- un premier champ PS1 qui est public et non chiffré ;
- un second champ pS1 qui est privé et qui est chiffré par ladite clé ;
H1 correspond à un hachage de X1, S1.

10. Procédé de communication d'un fichier (D1), d'un serveur à un système de gestion d'informations (IHS), le système IHS comprenant un ensemble de composants matériels et logiciels exploités par un système d'exploitation (OS) par l'intermédiaire de pilotes, ledit procédé impliquant les étapes ci-dessous :
- recevoir une demande de téléchargement sur ledit serveur en provenance d'un utilisateur ;
- accéder à une base de données comprenant une liste d'utilisateurs prédéterminés associée à des règles de restriction ou des droits d'utilisation appliqués auxdits utilisateurs ;
- si ledit utilisateur demandant le téléchargement d'un fichier numérique n'est pas répertorié dans ladite base de données, lancer alors, dans ledit système IHS, une procédure de détection système à des fins de collecte de données à partir desdits composants par l'intermédiaire desdits pilotes, et de signalement desdites données audit système d'exploitation ;
- générer un fichier de description système à partir de tout ou partie des données collectées dans le cadre de ladite procédure de détection système ;
- chiffrer tout ou partie dudit fichier de description système afin de générer une signature numérique d'authentification (ADS) identifiant de manière unique ledit système ;
- si ledit utilisateur est répertorié dans ladite base de données, récupérer alors ladite signature ADS affectée audit utilisateur ;
- générer une clé de chiffrement (K1) à partir de ladite signature ADS ;
- générer, en réponse à ladite demande de téléchargement, un fichier agrégé F1 comprenant les champs suivants : X1, S1 et H1 ;
dans lequel :
X1 est le fichier numérique (D1) chiffré avec ladite clé ;
S1 correspond à des paramétrages comprenant deux champs :
- un premier champ PS1 qui est public et non chiffré ;
- un second champ pS1 qui est privé et qui est chiffré par ladite clé ;
H1 correspond à un hachage de X1, S1.

11. Procédé exécuté dans un système IHS en vue de télécharger et d'exploiter le fichier communiqué conformément au procédé selon la revendication 9 ou la revendication 10, ledit procédé impliquant les étapes ci-dessous :
- recevoir ledit fichier agrégé téléchargé F1 ;
- lancer, sur ledit système IHS, un procédé de commande de documents impliquant les étapes ci-dessous :
- mettre en œuvre, sur ledit système IHS, une procédure de détection système à des fins de collecte de données, à partir desdits composants, par l'intermédiaire desdits pilotes, et de signalement desdites données audit système d'exploitation ;
- générer un fichier de description système à partir de tout ou partie des données collectées dans le cadre de ladite procédure de détection système ;
- chiffrer tout ou partie dudit fichier de description système afin de générer une signature numérique d'authentification (ADS) identifiant de manière unique ledit système ;
- générer une seconde clé de chiffrement (K2) à partir de ladite signature ADS ;
- déchiffrer ledit champ privé (pS1) dudit fichier agrégé avec ladite seconde clé ;
- déchiffrer X1 avec ladite seconde clé et ouvrir ledit document (D1) conformément aux droits d'utilisation et règles de restriction appliqués à l'utilisateur.

12. Procédé selon l'une quelconque des revendications 1 à 4, **caractérisé en ce que** lesdites informations de commande publiques définissent des règles de restriction connexes à l'une des fonctions suivantes :
- LIRE le fichier ;
- LIRE le fichier un nombre de fois prédéterminé ;
- IMPRIMER le fichier ;
- IMPRIMER le fichier un nombre de fois prédéterminé ;
- IMPRIMER le fichier avec une nuance « en filigrane » spécifique ;
- COPIER le fichier.

13. Système de gestion d'informations comprenant un ensemble de composants matériels et logiciels exploités par un système d'exploitation (OS) par l'intermédiaire de pilotes et comprenant en outre un moyen de communication pour communiquer avec un serveur, ledit système comprenant :
- un moyen pour initier une procédure de détection système à des fins de collecte de données à partir desdits composants par l'intermédiaire desdits pilotes, et de signalement desdites données audit système d'exploitation ;
- un moyen pour générer un fichier de description système à partir de tout ou partie des données collectées dans le cadre de ladite procédure de détection système ;
- un moyen pour chiffrer tout ou partie dudit fichier de description système afin de générer une signature numérique d'authentification (ADS) ;
- un moyen pour utiliser ladite signature numérique d'authentification (ADS) en vue de dériver une première clé de chiffrement/déchiffrement (K1) ; et
- un moyen pour utiliser ladite clé en vue de chiffrer un fichier à télécharger ou de déchiffrer un fichier chiffré en cours de téléchargement.

14. Système IHS selon la revendication 13, incluant en outre :
- un moyen pour recevoir ledit fichier agrégé téléchargé F1 comprenant les champs suivants :
X1, S1 et H1 ;
dans lequel :
X1 est le fichier numérique (D1) chiffré avec ladite clé ;
S1 correspond à des paramétrages comprenant deux champs :
- un premier champ PS1 qui est public et non chiffré ;
- un second champ pS1 qui est privé et qui est chiffré par ladite clé ;
H1 correspond à un hachage de X1, S1 ;
- un moyen pour mettre en œuvre, sur ledit système IHS, une procédure de détection système à des fins de collecte de données à partir desdits composants, par l'intermédiaire desdits pilotes, et de signalement desdites données audit système d'exploitation ;
- un moyen pour générer un fichier de description système à partir de tout ou partie des données collectées dans le cadre de ladite procédure de détection système ;
- un moyen pour chiffrer tout ou partie dudit fichier de description système afin de générer une signature numérique d'authentification (ADS) identifiant de manière unique ledit système ;
- un moyen pour générer une seconde clé de chiffrement (K2) à partir de ladite signature ADS, ladite seconde clé (K2) étant utilisée en vue de déchiffrer ledit champ privé (pS1) dudit fichier agrégé avec ladite seconde clé ;
- un moyen pour déchiffrer X1 avec ladite seconde clé et ouvrir ledit document (D1) conformément aux droits d'utilisation et règles de restriction appliqués à l'utilisateur ; et
- un moyen pour ouvrir ledit document (D1) conformément à des droits d'utilisation définis dans ledit champ S1.

15. Programme informatique de sécurité destiné à sécuriser le téléchargement d'un fichier numérique, ledit programme informatique de sécurité présentant des éléments de code de programme pour mettre en œuvre un procédé selon l'une quelconque des revendications 1 à 12.
